# EUROPÄISCHE PATENTSCHRIFT

(11) **EP 0 427 943 B1**
(45) Veröffentlichungstag und Bekanntmachung des Hinweises auf die Patenterteilung: **08.09.1993**
(21) Anmeldenummer: 90118792.2
(22) Anmeldetag: 01.10.1990
(51) Int. Cl.: G01N 21/17

(54) **Faseroptischer Sensor zum Nachweis von photothermischen Effekten**
Fibre-optic sensor for the detection of photothermic effects
Capteur à fibres optiques servant à la détection d'effets photothermiques

(30) Priorität: 15.11.1989 DE 3937905
(43) Veröffentlichungstag der Anmeldung: 22.05.1991
(73) Patentinhaber: DORNIER GMBH, D-88004 Friedrichshafen (DE)
(72) Erfinder: Walker, Karl-Heinz, Dr. Dipl.-Phys., W-7758 Daisendorf (DE); Sontag,, Heinz, Dr. Dipl.-Phys., D-7990 Friedrichshafen 24 (DE)
(74) Vertreter: Landsmann, Ralf, Dipl.-Ing.

(56) Entgegenhaltungen:
- EP-A- 0 054 292
- EP-A- 0 105 078
- DE-A- 3 146 700
- DE-A- 3 510 314
- DE-A- 3 813 258

## Beschreibung

Die Erfindung betrifft einen faseroptischen Sensor zum Nachweis von photothermischen Phänomenen unter Ausnutzung des Prinzips der photothermischen Strahlablenkung.

Photothermische und photoakustische Effekte werden genutzt zur Untersuchung strahlungsloser Prozesse, beispielsweise in der Spektroskopie, der Analytik (ultrasensitiven Konzentrationsbestimmung in Gasen und Flüssigkeiten), zur Geschwindigkeitsbestimmung von bewegten Medien oder zur Charakterisierung von Festkörpern und dünnen Schichten, beispielsweise zur Bestimmung von Porositäten in Keramiken.

Bei der Photothermik wird moduliertes Licht durch Absorption in einem Medium in Wärme überführt. Die Temperaturveränderung in dem Medium führen zu lokalen Dichteänderungen. Ein Nachweis der Temperaturänderungen kann direkt durch temperaturempfindliche Detektoren oder durch IR-Detektoren erfolgen. Ebenso besteht die Möglichkeit, die Dichteänderungen, die das Entstehen einer Druck- und Wärmequelle bewirken, auf akustischem Wege mittels akustischer Detektoren oder auf optischem Wege beispielsweise durch Ablenkung eines Probestrahls nachzuweisen. Durch die Verwendung von monochromen Lichtquellen variabler Wellenlänge können im Falle der Analytik durch Anregung ausgewählter Absorptionsbande hohe Stoffselektivitäten erreicht werden. Hierfür werden üblicherweise Hochleistungslichtquellen oder Laser verwendet. Stand der Technik zum Nachweis photothermischer Effekte sind relativ große, komplexe optische Aufbauten, wobei die Justierung der Strahlengänge zueinander sehr kritisch ist.
Eine Trennung von Meßgerät und Meßort, wie dies bei In-Line-Anwendungen, beispielsweise in kritischen Umgebungen, häufig notwendig ist, kann hier praktisch nicht durchgeführt werden.

DE-A-3 510 314 beschreibt ein Verfahren worin eine Probe unter Verwendung des photothermischen Effektes von einer modulierten Lichtbestrahlung und einem Abtaststrahl beleuchtet wird. Die Richtung des reflektierten Abtaststrahls wird von der durch den modulierten Lichtstrahl hervorgerufenen mechanischen Ausdehnung bestimmt.

EP-A-0 105 078 beschäftigt sich mit photothermischer Messung wobei eine Oberfläche mit einem einzigen Strahl beleuchtet und das reemittierte IR Licht detektiert wird. Die beiden Lichtstrahlen werden durch Fasern zur bzw. von der Oberfläche geleitet.

Der Erfindung liegt die Aufgabe zugrunde, einen Sensor anzugeben, mit dem photothermische Effekte in zu untersuchenden Stoffen analysiert werden können.

Die Aufgabe wird durch einen faseroptischen Sensor nach Anspruch 1 gelöst. Ausgestaltungen sind Gegenstand von Unteransprüchen.

Gemäß der Erfindung wird ein faseroptischer Sensor angegeben, der über mindestens eine Lichtleitfaser angesteuert wird.
Bei der Verwendung einer einzelnen Faser wird durch gleichzeitiges Führen des Anregungs- und Probenlichtes in einer Faser automatisch eine Vorjustage des optischen Strahlenganges erreicht. Diese automatische Vorjustage wird bei der Verwendung mehrerer Fasern durch die Führung der Fasern erreicht, wobei zumindestens die Faserenden parallel nebeneinander geführt werden und Anregungslicht und Probenlicht in verschiedenen Lichtleitfasern geführt sind. Insbesondere wird durch den Einsatz einer geeigneten Optik die Bedingung des optischen Strahlenganges zum Nachweis photothermischer Ablenkung erfüllt, so daß ein kleiner, einfacher und robuster Sensor aufgebaut werden kann.

Probelichtstrahl und modulierter Anregungslichtstrahl werden in die eine oder jeweils in eine der Lichtleitfasern eingekoppelt. Als Lichtquellen sind LASER, LEDs oder Hochleistungsweißlichtquellen mit vorgeschaltetem Monochromator verwendbar. Die Lichtstrahlen können direkt in Lichtleitfasern aus den Lichtquellen austreten und dann in eine gemeinsame Lichtleitfaser eingekoppelt werden, oder die Lichtstrahlen treten aus den Lichtquellen aus, laufen zunächst nicht in Lichtleitfasern und werden dann über geeignete optische Mittel in die oder eine der Lichtleitfasern eingekoppelt. Am Ende der Lichtleitfaser treten Probenlichtstrahl und Anregungslichtstrahl aus und werden in das Probenvolumen abgebildet. Die Abbildung erfolgt derart, daß die beiden Lichtstrahlen zwei nebeneinanderliegende Brennpunkte aufweisen. Die Abbildung kann durch eine geeignete chromatische Linse vorgenommen werden. im Bereich der Brennpunkte befindet sich das zu analysierende Medium, beispielsweise eine Flüssigkeit in einer Küvette oder ein Gas in einem geeigneten Behälter. Durch den Lichteinfall wird das Medium räumlich unterschiedlich erwärmt und verändert seine optischen Eigenschaften. insbesondere treten hierdurch Brechungsindexgradienten auf, so daß in der vorgegebenen Geometrie ein Probenlichtstrahl abgelenkt wird und von einer thermischen Linse gesprochen werden kann. Die Größe der Ablenkung ist direkt ein Maß für die erfolgte absorbierte Lichtleistung. Das Probenlicht wird von einem Detektor aufgenommen, wobei aus dem gesamten Probenlichtstrahl nur ein Teil durch eine geeignete Lochblende zum Detektor gelangt. In dieser Anordnung erkennt der Detektor bereits sehr kleine Ablenkungen des Probenlichtstrahls durch die Veränderung der Lichtintensität und in einer Auswerteschaltung sind direkt Meßergebnisse, beispielsweise durch phasenempfindlichen Nachweis, zu erzielen. Der Anregungslichtstrahl, der im wesentlichen zur Erwärmung beiträgt, wird durch Filter abgeblockt und gelangt nicht zum Detektor. Alternativ kann, durch Verwendung eines Zeilen- oder Flächendetektors die induzierte Ablenkung direkt in einer Auswerteeinheit ermittelt werden.

Im optischen Strahlengang können Optik, Meßobjekt, Filter, Lochblende und Detektor hintereinanderliegen.

Das Auslesen der Sensorinformation kann auch durch partielle Rückabbildung des Probenstrahls in die einzelne Lichtleitfaser, oder bei mehreren Fasern in eine der Fasern, und Nachweis nach Trennung des zurücklaufenden vom hinlaufenden Strahl erfolgen. Das Faserende, in dem das Probenlicht zurückgekoppelt wird, wirkt hierbei als Lochblende. Alternativ kann ein Photodetektor in den Sensor integriert werden.

Bei der Ausnutzung der Photoakustik wird ein geeigneter Schalldetektor in den Sensor integriert. Vorteilhaft bei diesem Aufbau ist, daß der Detektor aufgrund der sich zylinder- oder kugelförmig ausbreitenden Schallwelle an beliebigen Stellen im Medium positioniert werden kann.
Die elektrische Versorgung des Sensors kann durch partielle Umwandlung des Anregungs- und/oder des Probenlichts in elektrischen Strom einer in den Sensor integrierten Solarzelle erfolgen.

Wenn keine Absorption in dem zu analysierenden Medium stattfindet, zeigt die Auswerteschaltung am Ausgang einen Nullpegel, also kein Signal an. Erst bei Erwärmung infolge von Absorption wird ein Detektorsignal angezeigt, die Absorption muß also nicht wie bei konventionellen Verfahren aus einem Gesamtspektrum herausgemessen werden. Das führt zu einer Empfindlichkeitssteigerung der Messung gegenüber konventioneller Absorptionsspektroskopie durch die erfindungsgemäße Vorrichtung, die mehrere Größenordnungen beträgt.

Bei der Verwendung mehrerer Lichtleitfasern können durch geschickte Anordnung von Anregungslichtfasern zur Probelichtfaser und Benutzung von Flächendetektoren sowie durch die Verwendung mehrerer Lichtquellen entsprechend mehrkomponentige Analysen durchgeführt werden.
Auch für Festkörper sind photothermische Effekte meßbar. Dort wird durch Erwärmung des Körpers statt einer Linsenbildung eine Spiegelbildung erzielt. Der reflektierte Probenlichtstrahl ist durch geeignete Hilfsmittel auf den Detektor zu lenken.

Der räumliche Versatz der Brennpunkte von Probenlichtstrahl und Anregungslichtstrahl, der für die Bildung und den Nachweis der photothermischen Strahlablenkung erforderlich ist, läßt sich bei einfasiger Anordnung durch Wahl des Linsenglases der chromatischen Optik und bei mehrfasiger Anordnung durch geeignete Anordnung der Fasern zueinander beeinflussen und damit auch auf einen optimierten Abstand einstellen.

Die Erfindung wird anhand von Ausführungsbeispielen näher erläutert. Es zeigen:
Fig. 1 den Aufbau eines faseroptischen Sensors in einfasiger Ausbildung
Fig. 2 den Aufbau nach Fig. 1 in mehrfasiger Ausbildung
Fig. 3 einen weiteren Aufbau eines einfasigen Sensors
Fig. 4 den Sensor nach Fig. 3 in mehrfasiger Ausbildung
Fig. 5 eine Variation der Anordnung nach Fig. 1
Fig. 6 einen weiteren Aufbau eines mehrfasigen Sensors
Fig. 7 eine Variation des Aufbaus nach Fig. 6
Fig. 8 eine Meßkurve für einen Aufbau nach Fig. 1

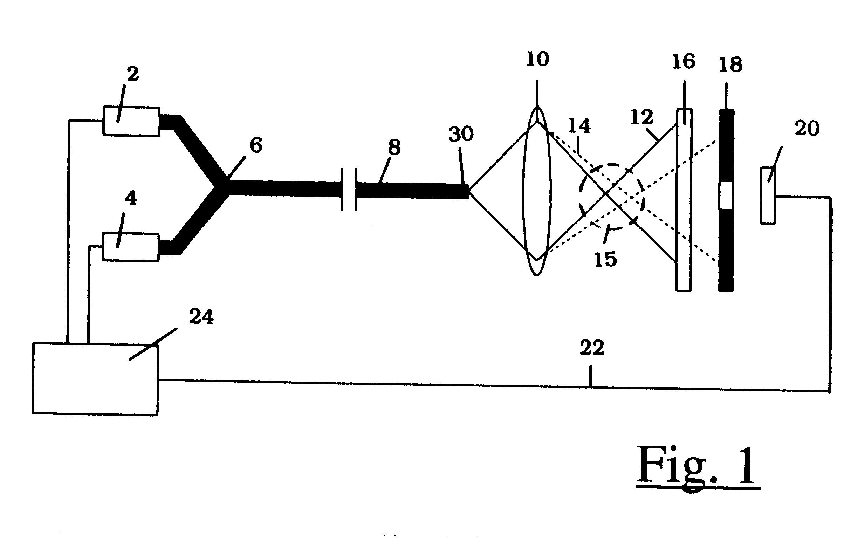

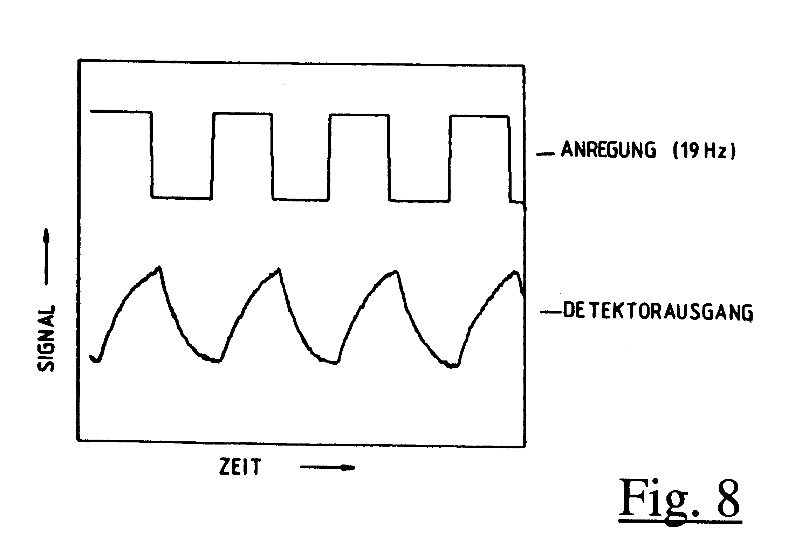

Fig. 1 zeigt den Aufbau eines faseroptischen Sensors zur thermischen Spektroskopie. Zwei Lichtquellen, eine Anregungslichtquelle 2 und eine Probenlichtquelle 4, mit unterschiedlicher Wellenlänge werden über eine Koppelvorrichtung 6 in eine Lichtleitfaser 8 eingekoppelt, wobei das Licht der Anregungslichtquelle 2 in geeigneter Weise, beispielsweise rechteckförmig wie in Fig. 8 gezeigt, moduliert ist und die Probenlichtquelle 4 kontinuierliches Licht aussendet. Eine geeignete Linsen- oder auch Spiegeloptik 10 fokussiert den Anregungslichtstrahl 12 und den Probenlichtstrahl 14 der beiden Lichtquellen 2 und 4 derart, daß optimale Bedingungen zur photothermisch induzierten Strahlablenkung erfüllt sind. Die fokussierten Lichtstrahlen haben voneinander beabstandete Brennpunkte, die innerhalb des Meßbereichs 15 liegen. Der Meßbereich 15 ist hier skizziert dargestellt; für Flüssigkeiten sind Küvetten oder für Gase geeignete Behälter verwendbar. Das Filter 16 passiert nur noch das Licht des Probenlichtstrahls 14, das auf einen geeigneten Detektor 20 mit davor befindlicher Lochblende 18 fällt. Der Anregungslichtstrahl wird am Filter 16 abgeblockt. Die Detektorsignale werden auf elektrischem Wege über eine Signalleitung 22 zurückgeführt und mit einer Auswerteeinheit 24 weiterverarbeitet.

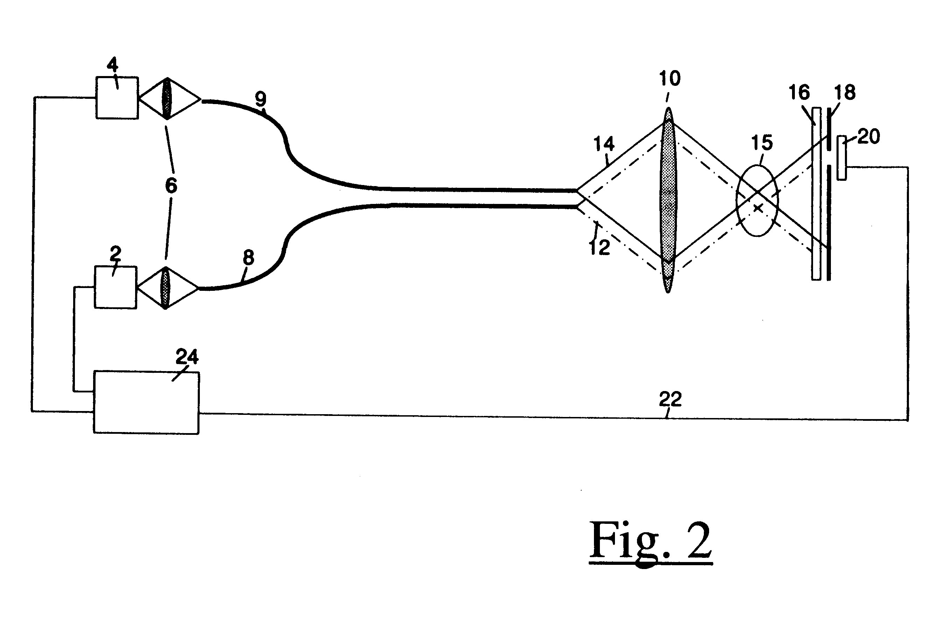

Die Fig. 2 zeigt eine Anordnung nach Fig. 1, bei der zwei Lichtleitfasern 8 und 9 vorgesehen sind, die zumindestens in ihrem Endbereich parallel nebeneinanderlaufen. Über Koppelvorrichtungen 6 wird das Licht der Anregungslichtquelle 2 und der Probenlichtquelle 4 in die beiden benachbarten Lichtleitfasern 8 und 9 eingekoppelt.

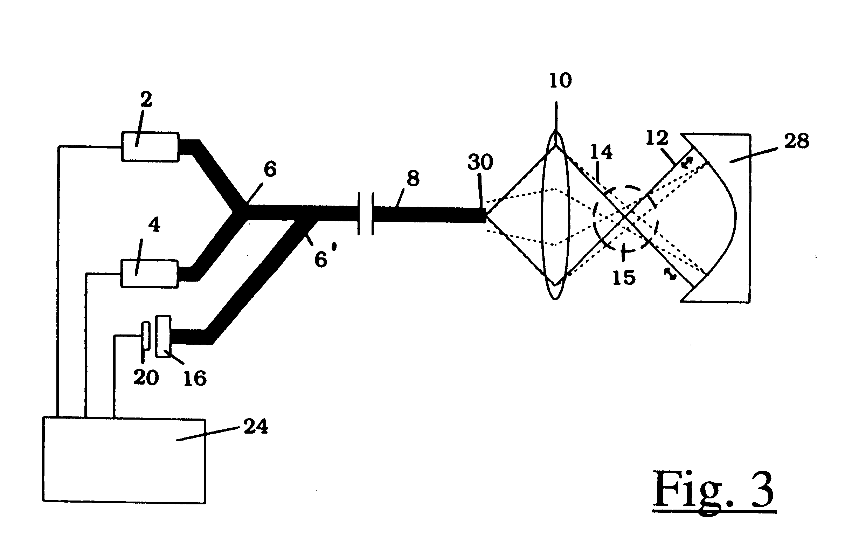

Die Fig. 3 zeigt einen weiteren Aufbau eines faseroptischen Sensors zur photothermischen Spektroskopie. Analog zu Fig. 1 werden die Lichtquellen 2 und 4 über eine Lichtleitfaser 8 geführt und mittels einer chromatischen Optik 10, gemäß geforderter Bedingung zum Nachweis der thermischen Strahlablenkung fokussiert. In geeignetem Abstand wird eine Spiegel- oder Linsenoptik 28 positioniert, so daß das reflektierte Probenlicht 14 auf das Faserende 30 zurückabgebildet wird und das Faserende 30 somit die Aufgabe einer Lochblende übernimmt. Das ausgeblendete Probenlicht wird über die Lichtleitfaser 8 zurückgeführt, in einer zweiten Koppeleinrichtung 6' aus der Lichtleitfaser 8 ausgekoppelt und zu einem Detektor 20 geführt, wobei das Filter 16 verbliebene Teile des Anregungslichtstrahls 12 ausfiltert. Das Filter 16 kann alternativ auch vor dem Faserende 30 oder der Optik 28 positioniert sein. Die Auswertung erfolgt dann, beispielsweise mittels phasenempfindlichem Nachweis, in der Auswerteeinheit 24.

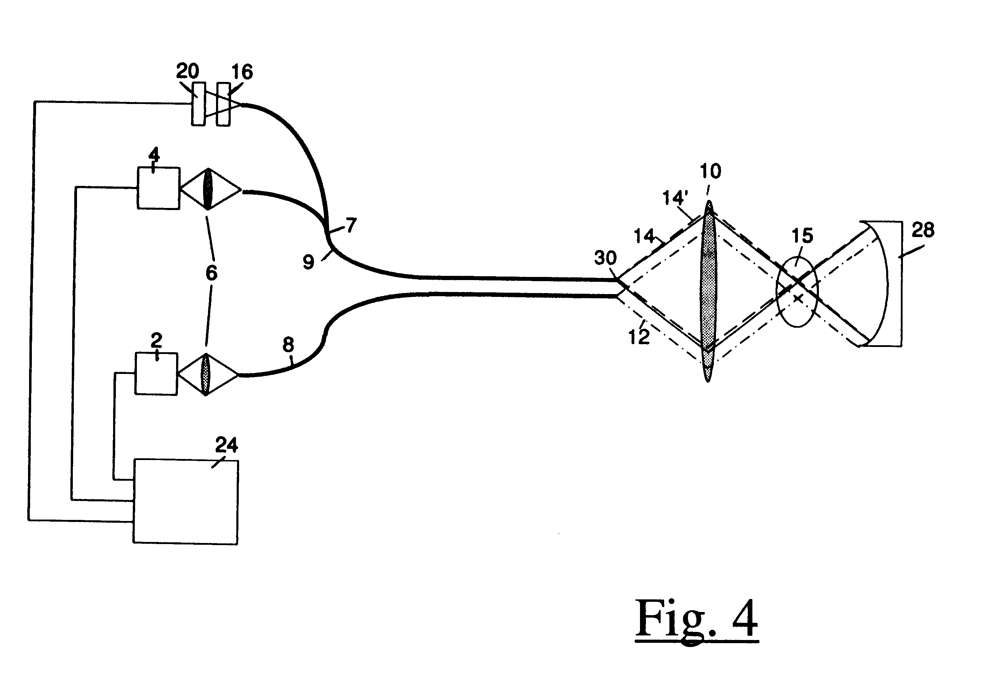

Analog zu Fig. 2 wird in Fig. 4 das Licht der Lichtquellen 2 und 4 über zwei Lichtleitfasern 8 und 9 geführt und mittels einer geeigneten Optik 10, gemäß geforderter Bedingungen zum Nachweis der thermischen Strahlablenkung, fokussiert. In geeignetem Abstand wird eine Spiegel- oder Linsenoptik 28 positioniert, so daß das reflektierte Probenlicht 14' räumlich versetzt auf das Faserende 30 zurückabgebildet wird und das Faserende 30 somit die Aufgabe einer Lochblende übernimmt. Das ebenfalls zurückreflektierte Anregungslicht ist hier aus Übersichtlichkeitsgründen nicht gezeigt. Das ausgeblendete Probenlicht wird über die Lichtleitfaser 9 zurückgeführt, in einer Koppeleinrichtung 7 aus der Lichtleitfaser 9 ausgekoppelt und zu einem Detektor 20 geführt, wobei das Filter 16 verbliebene Teile des Anregungslichtstrahls 12 ausfiltert. Das Filter 16 kann ebenfalls alternativ auch vor dem Faserende 30 oder der Optik 28 positioniert werden. Die Auswertung erfolgt in der Auswerteeinheit 24, beispielsweise wiederum durch phasenempfindlichen Nachweis.

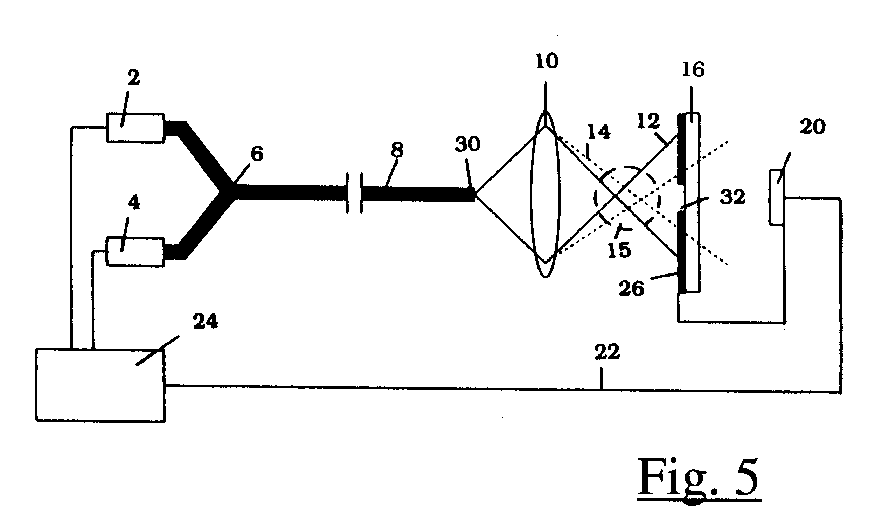

Die Fig. 5 zeigt eine Variation der Anordnung nach Fig. 1. Auf dem Filter 16 ist eine Solarzelle 26 angeordnet, die eine geeignete Öffnung 32 aufweist, welche wiederum als Lochblende dient. Das durch die Öffnung 32 hindurchgelangende Anregungslicht wird im Filter 16 abgeblockt, während das Probenlicht hindurchtreten kann und auf den Detektor 20 fällt.
Das nicht genutzte Licht des Probenlichtstrahls 14 und das Licht des Anregungslichtstrahls 12 wird in elektrische Energie umgewandelt und dient zur Versorgung des Detektors 20. Nur ein Teil des Probenlichtstrahls 14 tritt durch die Öffnung 32 in der Solarzelle 26 hindurch. Das Detektorsignal kann dann beispielsweise über eine LED in optische Signale umgewandelt werden und über die Lichtleitfaser 22 zur Auswerteeinheit gesendet werden, so daß eine Potentialtrennung zwischen Meßort und Auswerteeinheit möglich ist. Alternativ kann ein Vorverstärker in dem Detektor integriert werden und ein elektrisches Signal über die Signalleitung 22 zur Auswerteeinheit 24 geschickt werden.

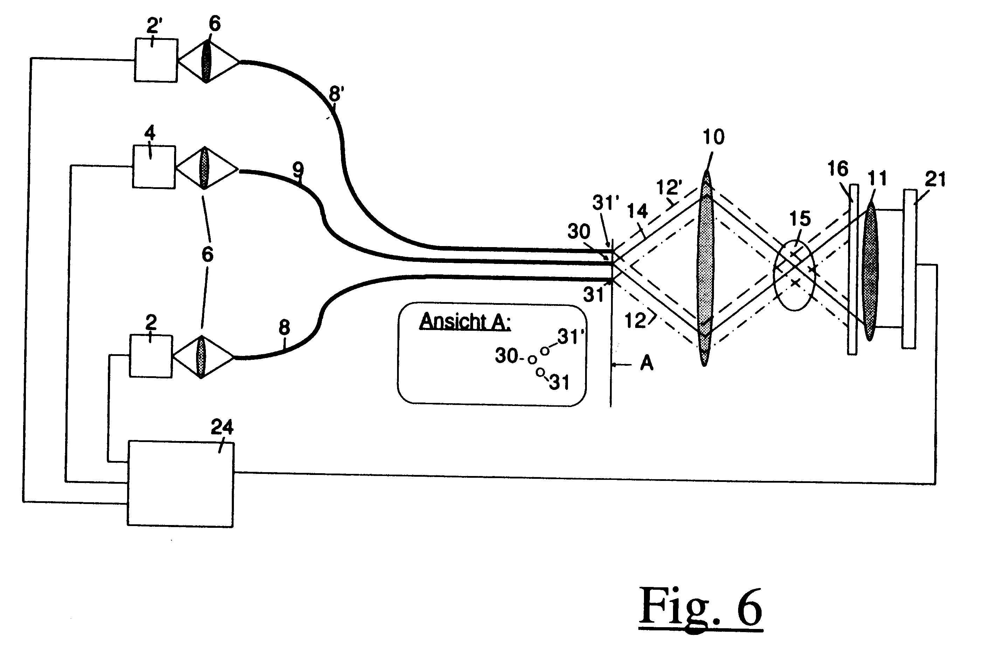

Fig. 6 zeigt eine Variation der Anordnung nach Fig. 2. Hier werden zwei Anregungslichtquellen 2 und 2' verschiedener Wellenlängen in Lichtleitfasern 8 und 8' eingekoppelt und am Ende mit der Probenlichtleitfaser 9 zusammen angeordnet. Nach der Meßstelle 15 wird das Anregungslicht durch die Vorrichtung 16 abgeblockt und das Probenlicht über eine geeignete Optik 11 zu einem ortsauflösenden Detektor 21 geleitet. Als Detektor 21 kommen beispielsweise eine ortsauflösende Lateraldiode oder ein Quadranten- oder Multielementdetektor in Frage. Durch Auswertung von Amplitude und Richtung der Strahlablenkung kann auf diese Weise eine Zweiwellenlängenanalyse durchgeführt werden. Durch Einsatz weiterer Anregungsstrahlen kann die Analyse auf mehrere Wellenlängen ausgedehnt werden.

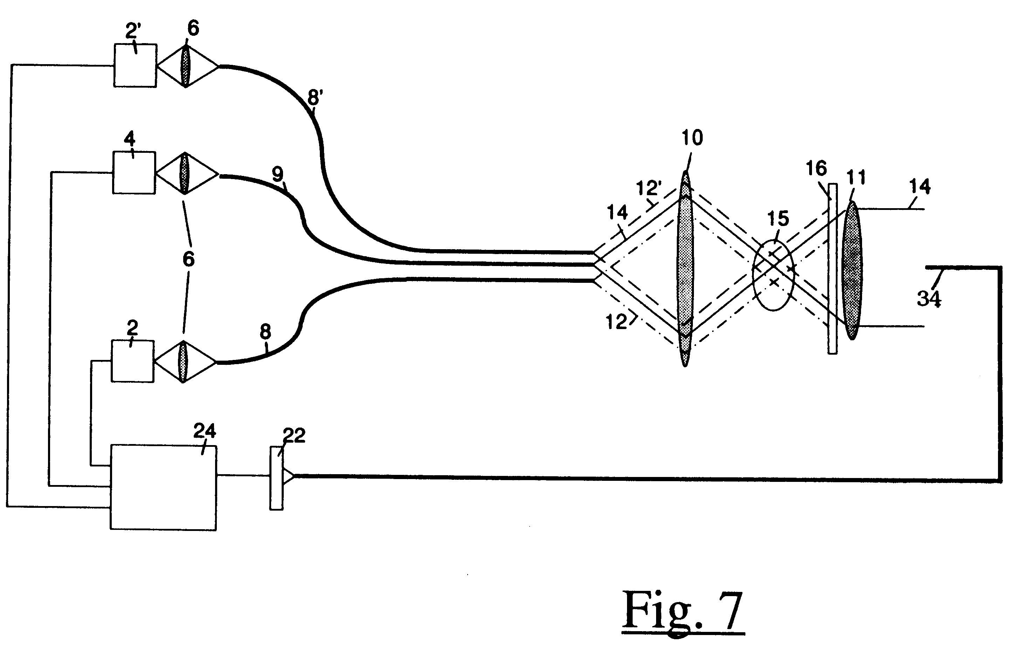

Fig. 7 zeigt eine Variation der Anordnung nach Fig. 2 und Fig. 6. Die Funktion der Blende 18 wird hier von einer Lichtleitfaser 34 übernommen, die einen Teil des Probenlichts 14 zum Detektor 22 leitet. Je nach Kompaktheit des Aufbaus kann auf die Optik 11 verzichtet werden. Das Anregungslicht 12 und 12' wird an geeigneter Stelle durch die Vorrichtung 16 abgeblockt. Das Meßsignal wird in der Auswerteeinheit 24 ausgewertet. Zur Mehrwellenlängenanalyse sind die Anregungslichtstrahlen unterschiedlich moduliert und die von ihnen verursachten Signale werden nach bekanntem Verfahren, beispielsweise phasenempfindlichem Nachweis, voneinander separiert.

Die Fig. 8 zeigt eine Meßkurve für einen Aufbau gemäß Fig. 1 oder Fig. 2. In den Fokusbereich wurde eine wässrige Kobalt-Lösung mit einer Konzentration von 200 ppm gebracht. Die Anregung erfolgt mit einem modulierten Argon-Laser (Wellenlänge λ = 514 nm), als Probelichtquelle wurde ein HeNe-Laser (Wellenlänge λ = 632,8 nm) verwendet. Als Lichtleitfaser wurde eine Multimode-Faser mit einem Innendurchmesser von 113 µm benutzt. Die obere Meßkurve zeigt den zeitlichen Verlauf der Anregung und die untere Meßkurve das entsprechende Detektorsignal.

Der beschriebene Sensor ermöglicht die Trennung von Meßgerät und Meßstelle. Somit ist eine Durchführung der Messung beispielsweise in kerntechnischen Anlagen, explosionsgefährdeten Bereichen oder sonstigen kritischen Umgebungen möglich. Der Sensor ist klein, leicht, kompakt, robust, einfach justierbar und preiswert, Anwendungen sind insbesondere auch in der Umweltanalyse bei empfindlichen Nachweisen feinster Spuren von Verschmutzungen oder bei der Prozesskontrolle möglich.
Bei einer mehrfasigen Anordnung ist auch möglich, den Meßbereich unmittelbar am Faserende der Lichtleitfasern anzuordnen. Die räumlich getrennten Brennpunkte ergeben sich dabei durch die Lage der Lichtleitfasern, so daß auf eine Optik zur Fokussierung verzichtet werden kann. Das Licht wird nach dem Meßbereich reflektiert und beispielsweise über eine weitere Lichtleitfaser zu einem Detektor geführt.

## Patentansprüche

1. Faseroptischer Sensor zur photothermischen Spektroskopie, mit
- wenigstens zwei Lichtquellen, einer Probenlichtquelle (**4**) und wenigstens einer Anregungslichtquelle (**2**), die Licht verschiedener Wellenlänge, von denen das Licht der Anregungslichtquelle (**2**) moduliert ist, aussenden,
- wenigstens einer Koppelvorrichtung (**6**), in der die Lichtstrahlen der beiden Lichtquellen in wenigstens eine Lichtleitfaser (**8**) eingekoppelt werden,
- einer Optik (**10**), die das am Faserende (**30**) austretende Licht derart abbildet, daß die Lichtstrahlen der Probenlichtquelle (**4**) und der Anregungslichtquelle (**2**) räumlich voneinander getrennte Brennpunkte bilden,
- der Anordnung des zu analysierenden Stoffes in einem Meßbereich (**15**) im Bereich der Brennpunkte,
- einem Detektor (**20,21,22**), der mit einer Auswerteeinheit (**24**) verbunden ist, mit der photothermische Strahlablenkung nachweisbar ist,
- einer ersten Vorrichtung (**16**), die das Licht der Anregungslichtquelle (**2**) nach Passieren des Meßbereichs (**15**) vor Erreichen des Detektors (**20**) abblockt und
- einer zweiten Vorrichtung (**18,30,34**), die nur einen Teil des Lichts der Probenlichtquelle nach Passieren des Meßbereichs (**4**) durchläßt.

2. Faseroptischer Sensor zur photothermischen Spektroskopie, mit
- wenigstens drei Lichtquellen, einer Probenlichtquelle (**4**) und wenigstens zwei Anregungslichtquellen (**2,2'**), die Licht verschiedener Wellenlänge, von denen das Licht der Anregungslichtquellen (**2,2'**) moduliert ist, aussenden,
- wenigstens einer Koppelvorrichtung (**6**), in der die Lichtstrahlen der Lichtquellen in wenigstens eine Lichtleitfaser (**8**) eingekoppelt werden,
- einer ersten Optik (**10**), die das am Faserende (**30**) austretende Licht derart abbildet, daß die Lichtstrahlen der Probenlichtquelle (**4**) und der Anregungslichtquellen (**2,2'**) räumlich voneinander getrennte Brennpunkte bilden,
- der Anordnung des zu analysierenden Stoffes in einem Meßbereich (**15**) im Bereich der Brennpunkte,
- einem ortsauflösenden Detektor (**21**), der mit einer Auswerteeinheit (**24**) verbunden ist, mit der photothermische Strahlablenkung nachweisbar ist,
- einer Vorrichtung (**16**), die das Licht der Anregungslichtquellen (**2,2'**) nach Passieren des Meßbereichs (**15**) vor Erreichen des Detektors (**21**) abblockt und
- einer zweiten Optik (**11**), die das Licht der Probenlichtquelle (**4**) nach Passieren der Vorrichtung (**16**) auf den Detektor (**21**) abbildet.

3. Faseroptischer Sensor nach Anspruch 1, **dadurch gekennzeichet**, daß die Lichtstrahlen der Anregungslichtquelle (**2**) und die Lichtstrahlen der Probenlichtquelle (**4**) in getrennten, wenigstens in ihren Endbereichen nebeneinanderliegenden Lichtleitfasern verlaufen.

4. Faseroptischer Sensor nach einem der Ansprüche 1 bis 3, **dadurch gekennzeichnet**, daß die erste Vorrichtung (**16**) ein Filter ist und im optischen Strahlengang zwischen Optik (**10**) und Detektor (**20,21**) nach dem Meßbereich (**15**) vorgesehen ist.

5. Faseroptischer Sensor nach Anspruch 1 oder 3, **dadurch gekennzeichnet**, daß die Vorrichtung (**18**) eine Schlitz- oder Lochblende oder eine definierte Kante ist, und daß die Vorrichtung (**18**) im optischen Strahlengang zwischen Optik (**10**) und Detektor (**20**) nach dem Meßbereich (**15**) vorgesehen ist.

6. Faseroptischer Sensor nach einem der Ansprüche 1 oder 3 bis 5, **dadurch gekennzeichnet**, daß die Vorrichtung (**16**) wenigstens eine mit einer Öffnung versehenen Solarzelle (**26**) trägt und daß die Vorrichtung (**16**) mit der Solarzelle (**26**) im optischen Strahlengang zwischen Optik (**10**) und Detektor (**20**) nach dem Meßbereich (**15**) vorgesehen ist.

7. Faseroptischer Sensor nach Anspruch 6, **dadurch gekennzeichnet**, daß Vorrichtungen vorgesehen sind, um mit der in der Solarzelle (**26**) erzeugte Energie den Detektors (**20**) zu versorgen.

8. Faseroptischer Sensor nach einem der Ansprüche 1 oder 3 bis 5, **dadurch gekennzeichnet**, daß im optischen Strahlengang nach dem Meßbereich (**15**) eine Optik (**28**) vorgesehen ist, die die Lichtstrahlen von Probenlichtquelle (**4**) und Anregungslichtquelle (**2**) reflektiert und daß eine zweite Koppeleinrichtung (**6′, 7**) vorgesehen ist, über die das reflektierte und in der Optik (**10**) auf das Faserende (**30**) zurückabgebildete Licht über die Vorrichtung (**16**) auf den Detektor (**20**) auskoppelbar ist.

9. Faseroptischer Sensor nach einem der Ansprüche 1, 3, 4 oder 8, **dadurch gekennzeichnet**, daß die nur einen Teil des Probenlichtstrahls (**14**) durchlassende Vorrichtung eine Lichtleitfaser (**34**) ist, die im optischen Strahlengang hinter dem Meßbereich (**15**) und der Vorrichtung (**16**) angeordnet ist und diesen Teil des Probenlichtstrahls (**14**) zum Detektor (**22**) leitet.

10. Faseroptischer Sensor zur photothermischen Spektroskopie, mit
- wenigstens zwei Lichtquellen, einer Probenlichtquelle und wenigstens einer Anregungslichtquelle, die Licht verschiedener Wellenlänge, von denen das Licht der Anregungslichtquelle moduliert ist, aussenden,
- wenigstens zwei Koppelvorrichtungen, in denen die Lichtstrahlen der beiden Lichtquellen in wenigstens zwei Lichtleitfasern eingekoppelt werden, die wenigstens in ihren Endbereichen nebeneinanderliegend verlaufen,
- der Anordnung des zu analysierenden Stoffes in einem Meßbereich unmittelbar am Faserende, wobei die Lichtstrahlen der Probelichtquelle und der Anregungslichtquelle im Meßbereich räumlich voneinander getrennte Punkte entsprechend der Lage der Faserenden zueinander bilden,
- einer Optik, die die Lichtstrahlen von Probenlichtquelle und Anregungslichtquelle nach dem Meßbereich reflektiert und auf das Faserende zurückabbildet,
- einem Faserende, das für das reflektierte Licht eine Vorrichtung bildet, die nur einen Teil des Lichts der Probenlichtquelle durchläßt,
- einem Detektor, der mit einer Auswerteeinheit verbunden ist, mit der photothermische Strahlablenkung nachweisbar ist,
- einer Vorrichtung, die das Licht der Anregungslichtquelle nach Passieren des Meßbereichs vor Erreichen des Detektors abblockt und
- einer weiteren Koppeleinrichtung, über die das reflektierte und auf das Faserende zurückabgebildete Licht über die Vorrichtung auf den Detektor auskoppelbar ist.

11. Faseroptischer Sensor nach Anspruch 10, **dadurch gekennzeichnet**, daß die das Licht der Anregungslichtquelle abblockende Vorrichtung ein Filter ist und im optischen Strahlengang zwischen Optik und Detektor nach dem Meßbereich vorgesehen ist.

12. Faseroptischer Sensor nach einem der vorherigen Ansprüche, **dadurch gekennzeichnet**, daß ein Schalldetektor zum Nachweis photoakustischer Phänomene im Meßbereich (**15**) vorgesehen ist.

13. Faseroptischer Sensor nach einem der vorherigen Ansprüche, **dadurch gekennzeichnet**, daß die Lichtquellen (**2, 2', 4**) Laser sind.

14. Faseroptischer Sensor nach einem der Ansprüche 1 bis 12, **dadurch gekennzeichnet**, daß die Lichtquellen (**2, 2', 4**) LEDs sind.

15. Faseroptischer Sensor nach einem der Ansprüche 1 bis 12, **dadurch gekennzeichnet**, daß die Anregungslichtquellen (**2,2'**) Laser sind und die Probenlichtquelle (**4**) eine LED ist.

16. Faseroptischer Sensor nach einem der Ansprüche 1 bis 12, **dadurch gekennzeichnet**, daß die Anregungslichtquellen (**2,2'**) Weißlichtquellen mit nachgeschaltetem Monochromator sind und die Probenlichtquelle (**4**) eine LED ist.

## Claims

1. Fibre-optic sensor for photothermic spectroscopy, having
- at least two light sources, a sample light source (4) and at least one energizer light source (2), which emit light of different wavelengths, of which the light of the energizer light source (2) is modulated;
- at least one coupler device (6), in which the light rays of the two light sources are coupled into at least one light conducting fibre (8);
- optical means (10) which project the light emitted at the fibre end (30) in such a manner that the light rays of the sample light source (4) and the energizer light source (2) form focal points which are spatially separate from one another;
- the disposition of the substance to be analysed in a measuring region (15) in the vicinity of the focal points;
- a detector (20, 21, 22) which is connected to an evaluation unit (24) with which photothermic ray deflection can be detected;
- a first device (16), which blocks off the light from the energizer light source (2) when it has passed through the measuring region (15) and before it reaches the detector (20); and
- a second device (18, 30, 34), which only allows some of the light from the sample light source (4) through after it has passed through the measuring region.

2. Fibre-optic sensor for photothermic spectroscopy, having
- at least three light sources, a sample light source (4) and at least two energizer light sources (2, 2'), which transmit light of different wavelengths, of which the light of the energizer light sources (2, 2') is modulated;
- at least one coupler device (6), in which the light rays of the light sources are coupled into at least one light conducting fibre (8);
- first optical means (10) which project the light emerging at the fibre end (30) in such a manner that the light rays of the sample light source (4) and the energizer light sources (2, 2') form focal points that are spatially separate from one another;
- the disposition of the substance to be analysed in a measuring region (15) in the vicinity of the focal points;
- a position resolving detector (21), which is connected to an evaluation unit (24) with which photothermic ray deflection can be detected;
- a device (16) that blocks off the light of the energizer light sources (2, 2') after it has passed through the measuring region (15) and before it reaches the detector (21); and
- second optical means (11), which projects the light of the sample light source (4) onto the detector (21) after it has passed through the device (16).

3. Fibre-optic sensor according to claim 1, characterised in that the light rays of the energizer light source (2) and the light rays of the sample light source (4) travel along separate light-conducting fibres, which are adjacent one another at least in their end regions.

4. Fibre-optic sensor according to any one of claims 1 to 3, characterised in that the first device (16) is a filter and is provided in the optical ray path between the optical means (10) and the detector (20, 21) after the measuring region (15).

5. Fibre-optic sensor according to claim 1 or 3, characterised in that the device (18) is a slit diaphragm or perforated screen or a defined edge, and in that the device (18) is provided in the optical ray path between the optical means (10) and the detector (20) after the measuring region (15).

6. Fibre-optic sensor according to any one of claims 1 or 3 to 5, characterised in that the device (16) has at least one solar cell (26) provided with an aperture; and in that the device (16) with the solar cell (26) is provided in the optical ray path between the optical means (10) and the detector (20) after the measuring region (15).

7. Fibre-optic sensor according to claim 6, characterised in that devices are provided to supply the detector (20) with the energy generated in the solar cell (26).

8. Fibre-optic sensor according to any one of claims 1 or 3 to 5, characterised in that optical means (28) are provided in the optical ray path after the measuring region (15), which means reflect the light rays from the sample light source (4) and the energizer light source (2); and in that a second coupling device (6',7) is provided, via which the reflected light which is projected back in the optical means (10) onto the fibre end (30) can be decoupled via the device (16) onto the detector (20).

9. Fibre-optic sensor according to one of claims 1, 3, 4 or 8, characterised in that the device which only allows a part of the sample light ray (14) to pass through is a light-conducting fibre (34), which is disposed in the optical ray path behind the measuring region (15) and the device (16), and conducts this part of the sample light ray (14) to the detector (22).

10. Fibre-optic sensor for photothermic spectroscopy, having:
- at least two light sources, a sample light source and at least one energizer light source, which radiate light of different wavelengths, of which the light of the energizer light source is modulated;
- at least two coupler devices, in which the light rays of both light sources are coupled into at least two light-conducting fibres, which are adjacent one another at least in their end areas;
- the disposition of the material to be analysed in a measuring region directly at the fibre end, wherein the light rays of the sample light source and the energizer light source in the measuring region form points that are spatially separate from one another according to the position of the fibre ends in relation to one another;
- optical means which reflect the light rays from the sample light source and the energizer light source after the measuring region and project them back onto the fibre end;
- a fibre end which forms a device for the reflected light which only allows some of the light of the sample light source to pass through;
- a detector, which is connected to an evaluation device with which photothermic ray deflection can be detected;
- a device which blocks off the light of the energizer light source after it has passed through the measuring region and before it reaches the detector; and
- a further coupler device, via which the reflected light which is projected back onto the fibre end can be decoupled via the device onto the detector.

11. Fibre-optic sensor according to claim 10, characterised in that the device blocking off the light from the light source is a filter and is provided in the optical ray path between the optical means and the detector behind the measuring region.

12. Fibre-optic sensor according to any one of the preceding claims, characterised in that an acoustic detector is provided to detect photoacoustic phenomena in the measuring region (15).

13. Fibre-optic sensor according to any one of the preceding claims, characterised in that the light sources (2, 2', 4) are lasers.

14. Fibre-optic sensor according to any one of claims 1 to 12, characterised in that the light sources (2, 2', 4) are LEDs.

15. Fibre-optic sensor according to any one of claims 1 to 12, characterised in that the energizer light sources (2, 2') are lasers and the sample light source (4) is an LED.

16. Fibre-optic sensor according to any one of claims 1 to 12, characterised in that the energizer light sources (2, 2') are white light sources with monochromators which are connected downstream, and the sample light source (4) is an LED.

## Revendications

1. Capteur à fibres optiques pour la spectroscopie photothermique, comprenant
- au moins deux sources de lumière, une source de lumière échantillon (4) et au moins une source de lumière d'excitation (2), qui émettent de la lumière de différentes longueurs d'ondes, la lumière provenant de la source de lumière d'excitation (2) étant modulée,
- au moins un dispositif de couplage (6) dans lequelles faisceaux lumineux des deux sources de lumière sont injectés dans au moins une fibre optique (8),
- un système optique (10) qui reproduit la lumière sortant à l'extrémité (30) de la fibre de telle façon que les faisceaux lumineux de la source de lumière échantillon (4) et de la source de lumière d'excitation (2) forment deux foyers séparés dans l'espace,
- le positionnement de la matière à analyser dans une plage de mesure (15) dans la région des foyers,
- un détecteur (20, 21, 22) qui est couplé avec une unité d'interprétation (24) capable de détecter une déflexion photothermique du faisceau,
- un premier dispositif (16) qui bloque la lumière de la source de lumière d'excitation (2) après le passage par la plage de mesure (15) et avant l'arrivée sur le détecteur (20), et
- un second dispositif (18, 30, 34) qui ne laisse passer qu'une partie de la lumière de la source de lumière échantillon (4) après le passage par la plage de mesure.

2. Capteur à fibres optiques pour la spectroscopie photothermique, comprenant
- au moins trois sources de lumière, une source de première échantillon (4) et au moins deux sources de lumière d'excitation (2, 2'), qui émettent de la lumière de différentes longueurs d'ondes, la lumière provenant des sources de lumière d'excitation (2, 2') tant modulée,
- au moins un dispositif de couplage (6) dans lequel les faisceaux lumineux des sources de lumière sont injectés dans au moins une fibre optique (8),
- une premier système optique (10) qui reproduit la lumière sortant de l'extrémité (30) de la fibre de telle façon que les faisceaux lumineux de la source de lumière échantillon (4) et des sources de lumière d'excitation (2, 2') forment des foyers séparés dans l'espace,
- le positionnement de la matière à analyser dans une plage de mesure (15) dans la région des foyers,
- un détecteur (21) à résolution de lieu qui est couplé avec une unité d'interprétation (24) capable de détecter une déflexion photothermique du faisceau,
- un dispositif (16) qui bloque la lumière des sources de lumière d'excitation (2, 2') après le passage par la plage de mesure (15) et avant l'arrivée sur le détecteur (21), et
- un second système optique (11) qui reproduit la lumière de la source de lumière échantillon (4) sur le détecteur (21) après le passage par le dispositif (16).

3. Capteur à fibres optiques selon la revendication 1, caractérisé en ce que les faisceaux lumineux de la source de lumière d'excitation (2) et les faisceaux lumineux de la source de lumière échantillon (4) parcourent des fibres optiques séparées dont au moins les sections terminales sont juxtaposées.

4. Capteur à fibres optiques selon l'une des revendications 1 à 3, caractérisé en ce que le premier dispositif (16) est un filtre et qu'il est prévu dans le trajet des rayons optiques entre le système optique (10) et le détecteur (20, 21), en aval de la plage de mesure (15).

5. Capteur à fibres optiques selon l'une des revendications 1 ou 3, caractérisé en ce que le dispositif (18) est un diaphragme à fente ou un sténopé ou encore une arête définie, et que le dispositif (18) est prévu dans le trajet des rayons optiques entre le système optique (10) et le détecteur (20), en aval de la plage de mesure (15).

6. Capteur à fibres optiques selon l'une des revendications 1 ou 3 à 5, caractérisé en ce que le dispositif (16) porte au moins une cellule solaire (26) pourvue d'une ouverture, et que le dispositif (16) avec la cellule solaire (26) est prévu dans le trajet des rayons optiques entre le système optique (10) et le détecteur (20), en aval de la plage de mesure (15).

7. Capteur à fibres optiques selon la revendication 6, caractérisé en ce qu'il comprend des dispositifs pour alimenter le détecteur (20) avec l'énergie produite dans la cellule solaire (26).

8. Capteur à fibres optiques selon l'une des revendications 1 ou 3 à 5, caractérisé en ce que dans le trajet des rayons optiques, en aval de la plage de mesure (15), est prévu un système optique (28) qui réfléchit les faisceaux lumineux de la source de lumière échantillon (4) et de la source de lumière d'excitation (2), et qu'il est prévu un second dispositif de couplage (6', 7) par l'intermédiaire duquel la lumière réfléchie et reproduite dans le système optique (10) sur l'extrémité (30) de la fibre peut être découplée sur le détecteur (20) par l'intermédiaire du dispositif (16).

9. Capteur à fibres optiques selon l'une des revendications 1, 3, 4 ou 8, caractérisé en ce que le dispositif qui ne laisse passer qu'une partie du faisceau de lumière échantillon (14) est une fibre optique (34) qui est disposée dans le trajet des rayons optiques, en aval de la plage de mesure (15) et du dispositif (16) et transmet cette partie du faisceau de lumière échantillon (14) au détecteur (22).

10. Capteur à fibres optiques pour la spectroscopie photothermique, comprenant
- au moins deux sources de lumière, une source de lumière échantillon et au moins une source de lumière d'excitation, qui émettent de la lumière de différentes longueurs d'ondes, la lumière provenant de la source de lumière d'excitation étant modulée,
- au moins deux dispositifs de couplage dans lesquels les faisceaux lumineux des deux sources de lumière sont injectés dans au moins deux fibres optiques dont les sections terminales sont juxtaposées,
- le positionnement de la matière à analyser dans une plage de mesure à proximité immédiate de l'extrémité des fibres, les faisceaux lumineux de la source de lumière échantillon et de la source de lumière d'excitation formant dans la plage de mesure des points séparés dans l'espace conformément à la position des extrémités des fibres,
- un système optique qui réfléchit les faisceaux lumineux de la source de lumière échantillon et de la source de lumière d'excitation en aval de la plage de mesure et les reproduit à nouveau sur l'extrémité des fibres,
- une extrémité de fibre qui forme pour la lumière réfléchie un dispositif qui ne laisse passer qu'une partie de la lumière de la source de lumière échantillon,
- un détecteur qui est couplé avec une unité d'interprétation capable de détecter une déflexion photothermique du faisceau,
- un dispositif qui bloque la lumière de la source de lumière d'excitation après le passage par la plage de mesure et avant l'arrivée sur le détecteur, et
- un dispositif de couplage supplémentaire par lequel la lumière réfléchie et reproduite en arrière sur l'extrémité de la fibre peut être découplée du détecteur par l'intermédiaire du dispositif.

11. Capteur à fibres optiques selon la revendication 10, caractérisé en ce que le dispositif qui bloque la lumière de la source de lumière d'excitation est un filtre prévu dans le trajet des rayons optiques entre le système optique et le détecteur, en aval de la plage de mesure.

12. Capteur à fibres optiques selon l'une des revendications précédentes, caractérisé en ce qu'un détecteur de son pour la détection de phénomènes photo-acoustiques est prévu dans la plage de mesure (15).

13. Capteur à fibres optiques selon l'une des revendications précédentes, caractérisé en ce que les sources de lumière (2, 2', 4) sont des lasers.

14. Capteur à fibres optiques selon l'une des revendications 1 à 12, caractérisé en ce que les sources de lumière (2, 2', 4) sont des diodes électroluminescentes (DELs).

15. Capteur à fibres optiques selon l'une des revendications 1 à 12, caractérisé en ce que les sources de lumière d'excitation (2, 2') sont des lasers et que la source de lumière échantillon (4) est une DEL.

16. Capteur à fibres optiques selon l'une des revendications 1 à 12, caractérisé en ce que les sources de lumière d'excitation (2, 2') sont des sources de lumière blanche suivies d'un monochromateur, et que la source de lumière échantillon (4) est une DEL.
